# EUROPÄISCHE PATENTSCHRIFT

(11) **EP 2 178 186 B1**
(45) Veröffentlichungstag und Bekanntmachung des Hinweises auf die Patenterteilung: **12.02.2020**
(21) Anmeldenummer: 09009962.3
(22) Anmeldetag: 01.08.2009
(51) Int. Cl.: H02J 3/38, H02J 3/32

(54) **Verfahren zum Betrieb eines Produktionssystems und/oder einer lokalen Anlage im Inselbetrieb**
Method for operating a production system and/or a local assembly operating in isolation
Procédé de fonctionnement d'un système de production et/ou d'une installation locale en fonctionnement autonome

(30) Priorität: 11.09.2008 DE 102008046747
(43) Veröffentlichungstag der Anmeldung: 21.04.2010
(73) Patentinhaber: INTILION GmbH, 08056 Zwickau (DE)
(72) Erfinder: Zoellner, Marc Dr., 59929 Brilon (DE); Riegel, Bernhard Dr., 59929 Brilon (DE); Lehmann, Gerhard, 79367 Weisweil (DE)
(74) Vertreter: Rausch Wanischeck-Bergmann Brinkmann

(56) Entgegenhaltungen:
- WO-A-2008/073453
- WO-A-2008/107767
- WO-A1-02/21661
- WO-A1-2006/032685
- DE-A1- 4 232 516
- US-A1- 2002 132 144

## Beschreibung

Die vorliegende Erfindung betrifft ein Verfahren zum Betrieb eines elektrischen Energieversorgungssystems im Inselbetrieb nach dem Oberbegriff von Anspruch 1 sowie ein elektrisches Energieversorgungssystems im Inselbetrieb nach dem Oberbegriff von Anspruch 10.

Bekanntermaßen erfolgt die Energieversorgung mit elektrischer Energie über ein in der Regel öffentliches Energieverteilungsnetz, welches die erzeugte elektrische Energie von mit dem öffentlichen Energieversorgungsnetz verbundenen elektrischen Energieerzeugungseinrichtungen an die entsprechenden, in der Regel von den Energieerzeugungseinrichtungen räumlich getrennt angeordneten Verbrauchsstellen beziehungsweise Verbraucher fördert und bereitstellt. Insbesondere in industrialisierten Regionen ist das öffentliche Energieverteilungsnetz gut ausgebaut, so dass eine nahezu vollflächige Versorgung der Verbrauchsstellen mit elektrischer Energie über das öffentliche Energieverteilungsnetz erfolgen kann.

Hiervon zu unterscheiden sind elektrische Energieversorgungssysteme im Inselbetrieb, wobei das Energieversorgungssystem eine elektrische Energieerzeugungseinrichtung, ein elektrisches Inselnetz sowie einen elektrischen Verbraucher umfasst. Das Energieversorgungssystem kann für eine elektrische Energieversorgung eines Produktionssystems, einer lokalen Anlage insbesondere eines Funktionsgebäudes wie eines Krankenhauses oder dergleichen vorgesehen sein. Der Inselbetrieb zeichnet sich insbesondere dadurch aus, dass das Energieversorgungsystem nicht mit einem öffentlichen Energieverteilungsnetz verbunden ist. Die Energieerzeugungseinrichtung ist in diesem Fall mit einem lokal eng begrenzten sogenannten Inselnetz verbunden, mittels welchem die von der Energieerzeugungseinrichtung erzeugte elektrische Energie zu lokal begrenzt angeordneten Verbrauchern übertragen werden kann. In der Regel umfasst ein derartiges Inselnetz neben einer endlichen Anzahl an Verbrauchsstellen beziehungsweise Verbrauchern eine einzige, gelegentlich auch zwei oder mehrere Energieerzeugungseinrichtungen. Zur Verbesserung der Versorgungssicherheit können weitere, insbesondere redundante Energieerzeugungseinrichtungen vorgesehen sein. Derartige Inselnetze kommen in industrialisierten Regionen in Bereichen zum Einsatz, die strukturschwach sind und/oder aufgrund ihrer geographischen Gegebenheiten nur mit erheblichem Kostenaufwand an ein öffentliches Energieverteilungsnetz angeschlossen werden können. Darüber hinaus gibt es eine Reihe von Inselnetzen im Kleinleistungsbereich, die beispielsweise bei Parkscheinautomaten, Wasserpumpen, Seezeichen und dergleichen zum Einsatz kommen. Im Inselbetrieb werden darüber hinaus viele elektrische Energieversorgungsnetze in den Entwicklungsländern oder ländlich geprägten Regionen betrieben.

Eine weitere Anwendung für Inselnetze findet sich in der Industrie, beispielsweise in großtechnischen Produktionsanlagen, und zwar insbesondere in Bereichen, bei denen große Energiemengen umgesetzt werden, das heißt, dass nicht nur große Energiemengen an den Verbrauchsstellen verbraucht werden, sondern zugleich auch große Energiemengen in anderen, beispielsweise nachgeordneten, parallelen Prozessen oder dergleichen erzeugt werden. Eine Ankopplung an ein öffentliches Energieverteilungsnetz kann hier nicht nur unnötig hohe Kosten sondern darüber hinaus auch elektrotechnische Probleme hinsichtlich der Kopplung verursachen. Genannt sei hier exemplarisch lediglich die Ausrüstung des öffentlichen Netzes für den geplanten Energiedurchsatz und die erforderliche Netzstabilität.

Ein wesentliches Problem der elektrischen Energieversorgung entsteht dadurch, dass elektrische Energie zu dem Zeitpunkt der Erzeugung auch verbraucht werden muss. Kann die zeitliche und mengenmäßige Abstimmung zwischen Energieerzeugung und Energieverbrauch nicht hergestellt werden, ist es erforderlich, Energiespeicher vorzusehen, weil ein Energieversorgungsnetz in der Regel über keine oder nur unwesentliche Energiespeicherkapazitäten verfügt. Energiespeicher sowie deren Unterhalt sind mit Kosten verbunden, weshalb im Bereich der Energieversorgungsnetze versucht wird, den Einsatz von Energiespeichern weitgehend zu vermeiden. Die durch die Energieerzeugungseinrichtung erzeugte elektrische Energie muss deshalb in der Regel unmittelbar durch die entsprechenden Verbrauchsstellen beziehungsweise Verbraucher verbraucht werden.

Eine Differenz, insbesondere eine zeitbezogene Differenz zwischen Energieerzeugung und Energieverbrauch führt nicht nur zu einer Reduzierung des Gesamtwirkungsgrads, sondern darüber hinaus auch zu elektrotechnischen Problemen, die insbesondere das Energieversorgungsnetz betreffen. Besonders ungünstig erweisen sich Abweichungen der insbesondere momentanen Energieerzeugung und des insbesondere momentanen Energieverbrauchs bei Inselnetzen, wobei die Auswirkungen mit der Höhe der Abweichungen sowie der Schnelligkeit der Änderungen der Abweichungen zunehmen. Entsprechend hohe Anforderungen sind an die Energieerzeugungseinrichtung zu stellen, die auf derartige Last- und/oder Erzeugungsschwankungen entsprechend schnell reagieren muss. Neben Spannungseinbrüchen, Überspannungen, Schwingungen oder dergleichen im Energieversorgungsnetz können insbesondere bei Wechselspannungsnetzen auch unerwünschte Frequenzabweichungen die Folge sein. Da eine Vielzahl elektrischer Geräte wechselspannungsbetrieben ist, besteht hier zusätzlich aufgrund von Frequenzabweichungen die ergänzende Gefahr einer hierdurch verursachten Funktionsstörung.

Bei öffentlichen Energieversorgungsnetzen können diese Probleme zwar auch auftreten, jedoch erweist es sich hier von Vorteil, dass eine Vielzahl von unabhängig betreibbaren Energieerzeugungseinrichtungen und Verbrauchsstellen miteinander gekoppelt sind, so dass eine große Schwankungsbreite zwischen Energieerzeugung und Energieverbrauch gut abgefangen werden kann. Diese Möglichkeit ist bei Inselnetzen in der Regel nicht gegeben.

Ein gattungsgemäßes Verfahren ist aus der WO 2008/073453 A1 bekannt. Dieses vorbekannte Verfahren dient dazu, einem öffentlichen Energieversorgungsnetz Energiespeichereigenschaften zu verleihen. Hierzu wird mit der WO 2008/073453 A1 vorgeschlagen, eine Vielzahl von an dem Energieversorgungsnetz angeschlossenen Batterien zu nutzen. In diesem Zusammenhang offenbart die WO 2008/073453 A1 auch einen Inselbetrieb für den Fall, in welchem das öffentliche Energieversorgungsnetz ausgefallen ist. Mittels einer Schalteinrichtung wird ein Notstrombetrieb realisiert, wobei das Inselnetz vom öffentlichen Energieversorgungsnetz abgeschaltet und stattdessen Energie aus einer angeschlossenen Energiequelle entnommen werden kann. Sobald das öffentliche Energieversorgungsnetz wieder verfügbar ist, wird die Hilfsenergiequelle abgeschaltet und das Inselnetz an das öffentliche Energieversorgungsnetz wieder angeschlossen.

Die US 2002/0132144 A1 offenbart eine Geschäftsmethode zum Betrieb eines Kommunikationssystems, um einen Echtzeitkauf und -verkauf von erzeugter elektrischer Energie durch Brennstoffzellen angetriebene Fahrzeuge (vehicle-to-grid) und einem Verbraucher zu ermöglichen. Die elektrische Energie wird über das öffentliche Energieversorgungsnetz verteilt.

Auch die WO 2008/107767 A2 befasst sich mit der "vehicle-to-grid"-Problematik. So offenbart die WO 200/107767 A2 eine Anschlussvorrichtung, mittels der ein Fahrzeug an ein öffentliches Energieversorgungsnetz angeschlossen werden kann. Über die Vorrichtung erfolgt eine Versorgung des Fahrzeugs mit elektrischer Energie. Darüber hinaus besteht die Möglichkeit, dem Fahrzeug aus einem Energiespeicher elektrische Energie zu entnehmen.

Es ist nunmehr die **Aufgabe** der vorliegenden Erfindung, ein Inselnetz so weiterzubilden, dass die vorgenannten Probleme reduziert werden können.

Als L**ösung** wird mit dem beanspruchten Verfahren ein Betrieb eines elektrischen Energieversorgungssystems im Inselbetrieb vorgeschlagen, der sich dadurch auszeichnet, dass die Energieerzeugung der elektrischen Energieerzeugungseinrichtung in Abhängigkeit der koppelbaren Energiespeicher geregelt wird.

Erstmals wird mit der Erfindung vorgeschlagen, dass die Verbraucher selbst als Puffer für Energieschwankungen in einem Inselnetz dienen. Separate Energiespeicher, beispielsweise in Form von stationären Akkumulatoranordnungen oder dergleichen, wie sie teilweise im Bereich der Energieerzeugungseinrichtung angeordnet werden, können eingespart werden. Die Verbraucher können dabei beispielsweise konventionelle Verbrauchsstellen wie elektrische und/oder elektronische Geräte, elektrische Antriebe, Traktionsfahrzeuge, insbesondere mit einem Elektroantrieb, ausfallsichere Energieversorgungen und dergleichen sein. Üblicherweise verfügen derartige Verbraucher über einen eigenen Energiespeicher in Form eines Akkumulators, eines Kondensators oder dergleichen. Der Energiespeicher kann auch durch eine elektrochemische Zelle gebildet sein, die bei Zufuhr elektrischer Energie diese in chemischer Umwandlung eines Stoffes reversibel speichert, beispielsweise indem Wasser in Wasserstoff und Sauerstoff zusetzt wird.

Vorliegend wird dieser Energiespeicher parallel zur Energieerzeugungseinrichtung und zum Verbraucher betrieben. Das heißt, bei einem Unterschuss an elektrischer Energie im Energieversorgungssystem wird zusätzlich zur mittels der Energieerzeugungseinrichtung erzeugten elektrischen Energie Energie aus dem Energiespeicher des Verbrauchers entnommen und in das Inselnetz eingespeist. Bei einem Überschuss an elektrischer Energie im Energieversorgungssystem wird durch den oder die Verbraucher nicht verbrauchte Energie im Energiespeicher des Verbrauchers gespeichert. Die im Energiespeicher gespeicherte Energie kann zu einem späteren Zeitpunkt zur Einspeisung in das Inselnetz, insbesondere bei einem Unterschuss von elektrischer Energie im Energieversorgungssystem wieder abgerufen werden. Insofern unterscheidet sich der Betrieb des Energiespeichers des Verbrauchers gegenüber einem normalen Ladevorgang eines Akkumulators.

Die Verbraucher können ortsfest angeordnet sein, sie können aber auch mobil sein, wie beispielsweise ein Elektrofahrzeug, insbesondere ein elektrisch betriebener Gabelstapler oder dergleichen. Gerade bei elektrisch betriebenen Fahrzeugen ist es üblich, dass das Fahrzeug einen eigenen Akkumulatorsatz aufweist, der, sobald er einen vorgegebenen Ladungszustand unterschreitet, gegen einen aufgeladenen Akkumulatorsatz getauscht wird. Der ausgetauschte Akkumulatorsatz wird sodann an einer Ladestation wieder aufgeladen. Gerade hier erweist sich ein besonderer Vorteil des erfindungsgemäßen Verfahrens, welches es ermöglicht, an dem Inselnetz angeschlossene Verbraucher, deren Energiespeicher mit dem Inselnetz koppelbar sind, für das Inselnetz nutzbar zu machen. Hierzu werden die Energiespeicher mit dem Inselnetz gekoppelt, so dass diese nicht nur geladen werden können, sondern darüber hinaus auch bei Bedarf, vorzugsweise in vorgebbarer Art und Weise Energie entnommen werden kann. Hierdurch wird dem Inselnetz eine Energiespeicherkapazität verliehen, die es erlaubt, Energieschwankungen beziehungsweise Leistungsschwankungen auszugleichen. Gegebenenfalls können Umrichter vorgesehen sein, um die Energiespeicher mit dem Inselnetz elektrisch zu koppeln. Auf diese Weise können vorteilhaft Energiespitzen abgefangen werden, die über die Energieerzeugungsmöglichkeit der Energieerzeugungseinrichtung hinausgehen.

Netzausfälle können somit vermieden werden.

Die Energieerzeugungseinrichtung kann beispielsweise ein elektrischer Generator sein, der mittels Windkraft, Wasserkraft, einer Verbrennungskraftmaschine oder dergleichen angetrieben wird. Darüber hinaus kann die Energieerzeugungseinrichtung auch durch eine Brennstoffzelle, eine Solarzelle oder dergleichen sowie auch Kombinationen der genannten Energieerzeugungseinrichtungen bestehen. Das Inselnetz kann über übliche elektrotechnische Mittel zur Verteilung der elektrischen Energie verfügen. So können beispielsweise Schaltanlagen, insbesondere Niederspannungsschaltanlagen, Freileitungen und/oder dergleichen vorgesehen sein. Obwohl das Inselnetz für Gleichstrombetrieb ausgelegt sein kann, ist es vorteilhaft, das Inselnetz für einen Wechselstrombetrieb, vorzugsweise bei 400 V dreiphasig auszulegen, da hierdurch viele bereits am Markt vorhandene Produkte als Verbraucher beziehungsweise Energieerzeugungseinrichtung verwendet werden können.

Es kann vorgesehen sein, dass der Energiespeicher eines Verbrauchers nicht mit dem Inselnetz gekoppelt werden soll. Dies kann beispielsweise dann vorgesehen sein, wenn ein aufgeladener Energiespeicher in absehbarer Zeit für die Energieversorgung des Verbrauchers bereitstehen soll. In diesem Fall wäre Entnahme von Energie aus dem Energiespeicher zur Abdeckung einer Versorgungslücke im Inselnetz für den bestimmungsgemäßen Betrieb des Verbrauchers von Nachteil. Sind hinreichend weitere Verbraucher mit verfügbaren Energiespeichern, die mit dem Inselnetz gekoppelt sind, vorhanden, können letztere dazu verwendet werden, einen entsprechenden Energieausgleich zu bewirken. Weiterhin erweist es sich als vorteilhaft, wenn der Energiespeicher eines Verbrauchers automatisch mit dem Inselnetz gekoppelt ist, wenn der Verbraucher selbst mit dem Inselnetz gekoppelt ist. Hierdurch kann im Wesentlichen ungesteuert ein Zurverfügungstellen der Energiespeicher der Verbraucher für den Betrieb des Inselnetzes erreicht werden. Insgesamt lässt sich die Zuverlässigkeit des Inselnetzes mit dem Verfahren der Erfindung deutlich verbessern. Nicht nur Energiespitzen des Verbrauchs können besser abgefangen werden, sondern auch Energieüberschüsse bei der Energieerzeugungseinrichtung. Letztere können unter anderem dadurch auftreten, dass kurzfristig Verbraucher keine Energie mehr aus dem Inselnetz entnehmen. Oftmals ist die Energieerzeugungseinrichtung zeitlich träge, so dass über einen bestimmten Zeitraum mehr Energie erzeugt wird, als durch die verbliebenen Verbraucher verbraucht wird. Ohne weitere Maßnahmen können hier die eingangs genannten Probleme auftreten.

Dies wird durch die Erfindung ebenfalls reduziert.

Das gesteuerte Zurückspeisen der Energie in das Inselnetz kann beispielsweise mittels einer Kopplungseinheit erfolgen, die den Verbraucher beziehungsweise seinen Energiespeicher mit dem Inselnetz elektrisch koppeln kann. Die Kopplungseinheit kann zum Beispiel von einer Zentrale, mit der sie in Kommunikationsverbindung steht, und/oder auch vor Ort beim Verbraucher gesteuert werden.

Weiterhin wird mit der Erfindung vorgeschlagen, dass die erzeugte und die verbrauchte Energie saldiert wird. Dies erlaubt es, die Energieerzeugungseinrichtung hinsichtlich der erzeugten Energie an die tatsächlich für die Verbraucher benötigte Energie anzupassen. Auf diese Weise kann ein Gesamtwirkungsgrad des Inselnetzes optimiert werden, da ein unnötiger Überschuss an Energie bei der Energieerzeugung weitgehend vermieden werden kann. Das Saldieren kann zu diskreten Zeitpunkten oder auch kontinuierlich erfolgen. Beispielsweise kann das Saldieren im zeitlichen Abstand von wenigen Minuten, beispielsweise 5 Minuten, 10 Minuten, 15 Minuten oder dergleichen erfolgen. Vorzugsweise wird der zeitliche Abstand bei einem diskreten Saldieren an Eigenschaften des Inselnetzes angepasst gewählt, beispielsweise in Abhängigkeit von auftretenden Änderungsgeschwindigkeiten bei der Energieerzeugung und beim Energieverbrauch. Ein Ergebnis des Saldierens kann dazu verwendet werden, die Energieerzeugungseinrichtung sowie auch gegebenenfalls die Verbraucher zumindest teilweise, vorzugsweise vorausschauend zu steuern. Die Zuverlässigkeit und der Gesamtwirkungsgrad des Inselnetzes können weiter verbessert werden.

Gemäß einer weiteren Ausgestaltung wird vorgeschlagen, dass die Energiespeicher mit dem Inselnetz gesteuert gekoppelt werden. So kann erreicht werden, dass mit dem Inselnetz nur die erforderliche Anzahl von Energiespeichern gekoppelt werden. Die Steuerung kann beispielsweise über ein geeignetes Rundsteuersignal über das Inselnetz oder dergleichen erfolgen. Natürlich können auch Steuerungsmöglichkeiten über ein Kommunikationsnetz wie ein Mobilfunknetz, ein allgemeines Funknetz, über Satellit oder dergleichen vorgesehen sein. Vorzugsweise weisen die Verbraucher entsprechende Empfangseinrichtungen auf, die ein entsprechendes Steuersignal, welches von einer Zentrale ausgesendet werden kann, empfangen und in Abhängigkeit des empfangenen Signals ihren Energiespeicher mit dem Inselnetz koppeln. Natürlich kann auch vorgesehen sein, dass ein Verbraucher ein Signal an die Zentrale übermittelt, so dass der Energiespeicher nicht mit dem Inselnetz gekoppelt werden kann. So kann beispielsweise eine lokale Steuerung der Steuerung durch die Zentrale überlagert sein. Unterschiedliche Vorrangmodi können vorgesehen sein, beispielsweise Vorrang der lokalen Steuerung gegenüber der Steuerung durch die Zentrale, Vorrang einer Steuerung im Not- oder Störungsbetrieb durch die Zentrale vor einer lokalen Steuerung oder dergleichen. Die Zentrale kann beispielsweise mit der Energieerzeugungseinrichtung zusammenfallen. Die Zentrale kann eine Steuerungs- und Überwachungseinrichtung aufweisen, mit der der Betrieb des Inselnetzes überwacht beziehungsweise gesteuert wird. Weiterhin weist die Zentrale eine Sende- und/oder Empfangseinrichtung auf, mit der eine entsprechende Steuerung veranlasst werden kann.

Eine Weiterbildung sieht vor, dass das Koppeln in Anhängigkeit des Saldos erfolgt. So kann vorgesehen sein, dass mit fortschreitendem Unterschied zwischen Energieerzeugung und Energieverbrauch sukzessive zusätzliche Energiespeicher von Verbrauchern mit dem Inselnetz gekoppelt werden. Vorzugsweise ist die zusätzliche Kopplung nur abhängig vom Betrag der Differenz und nicht von deren Vorzeichen. So lassen sich nicht nur Energieverbrauchsspitzen sondern auch Energieerzeugungsspitzen abfangen.

Vorzugsweise erfolgt das Koppeln der Energiespeicher ferngesteuert. Die Fernsteuerung kann beispielsweise durch die Zentrale erfolgen. Natürlich können zusätzlich Betriebsschemata, beispielsweise bezogen auf den Betrieb des Verbrauchers, überlagert werden, so dass der bestimmungsgemäße Betrieb des Verbrauchers zu vorgebbaren Zeiträumen oder permanent gewährleistet werden kann.

Eine Weiterbildung sieht vor, dass ein sich wiederholendes, zeitbezogenes Leistungsextrem ermittelt wird. Die Ermittlung des Leistungsextrems kann dazu verwendet werden, das Inselnetz hinreichend zuverlässig auszulegen. Das Leistungsextrem kann sowohl hinsichtlich einer maximal erzeugten Leistung als auch hinsichtlich einer maximal verbrauchten Leistung beziehen.

Besonders vorteilhaft kann jedoch vorausschauend auch das Leistungsextrem gesteuert, insbesondere ferngesteuert werden. Vorteilhaft ist dies unter anderem bei regelmäßig wiederkehrenden Leistungsextrema, wenn beispielsweise abends Beleuchtungseinrichtungen eingeschaltet, eine solarbetriebene Energieerzeugungseinrichtung gegen Abend keine elektrische Energie mehr erzeugt oder dergleichen.

Weiterhin kann vorgesehen sein, dass ein Ladezustand des elektrischen Energiespeichers geregelt wird. Vorzugsweise wird der Ladezustand des Energiespeichers derart geregelt, dass zu jedem Zeitpunkt ein bestimmungsgemäßer Betrieb des Verbrauchers gewährleistet werden kann, vorzugsweise unabhängig von einer Energieversorgung über das Inselnetz. Es kann aber auch vorgesehen sein, dass der Energiespeicher derart geregelt wird, dass nur zu bestimmten vorgebbaren Zeiträumen ein bestimmungsgemäßer Betrieb des Verbrauchers, vorzugsweise ohne Energieaufnahme aus dem Inselnetz vorgesehen sein kann. So kann vorgesehen sein, dass bei einer solarbetriebenen Energieerzeugungseinrichtung der Energiespeicher seinen maximal geladenen Zustand einnimmt, so dass der Betrieb des Verbrauchers auch nach Reduzierung der eingespeisten Leistung durch die Energieerzeugungseinrichtung bestimmungsgemäß weiter betrieben werden kann. Der Ladezustand kann darüber hinaus derart geregelt werden, dass der Verbraucher beispielsweise auch an einem nächsten Morgen noch betrieben werden kann, wenn die Energieerzeugungseinrichtung noch nicht hinreichend Energie zum Betrieb sämtlicher Verbraucher ohne Energiespeicher liefert. Auch weitere Regelungsabläufe für den Ladungszustand des Energiespeichers können vorgesehen sein.

Es kann ferner vorgesehen sein, dass ein Kopplungszeitraum vorgegeben wird. Der Kopplungszeitraum kann beispielsweise derart gewählt werden, dass eine Kopplung nur während eines Leistungsextremums erfolgt. Natürlich können auch andere Zeiträume definiert werden, in denen eine Kopplung vorgenommen wird. Diese können durch Zweckmäßigkeitserwägungen begründet sein.

Besonders vorteilhaft erweist es sich, wenn der Ladezustand des Energiespeichers am Ende des Kopplungszeitraums vorgegeben wird. Dies erlaubt es nämlich, dass der Energiespeicher in einem vorgebbaren Zustand dem Verbraucher zur Verfügung steht. Der vorgegebene Ladezustand kann beispielsweise ein Mindestladezustand sein, der am Ende des Kopplungszeitraums gegeben sein muss. Darüber hinaus kann er auch ein maximaler Ladezustand sein, so dass der Energiespeicher in der Lage ist, weiterhin Energie aufnehmen zu können. Dies kann beispielsweise dann vorgesehen sein, wenn der Verbraucher im Traktionsbetrieb betrieben wird und nicht nur Energie verbraucht, sondern auch zumindest zeitweise selbst Energie erzeugt. Damit ein Überladen des Energiespeichers durch den in einem generatorischen Betrieb betriebenen Verbraucher vermieden werden kann, kann ein maximaler Ladezustand vorgegeben werden. Weitere Ausgestaltungen oder Kombinationen können vorgesehen sein.

Erfindungsgemäß wird die Energieerzeugung der elektrischen Energieerzeugungseinrichtung in Abhängigkeit der koppelbaren Energiespeicher geregelt. Hierzu kann die Zentrale beispielsweise die Anzahl der koppelbaren Energiespeicher erfassen und eine entsprechende Steuerung der Energieerzeugungseinrichtung veranlassen. Die Zuverlässigkeit des Inselnetzes kann weiter verbessert werden. Stehen beispielsweise nur eine geringe Anzahl an koppelbaren Energiespeichern zur Verfügung, kann die Energieerzeugungseinrichtung entsprechend wenig Energie erzeugen, um eine Überlastung zu vermeiden. Sind dagegen eine Vielzahl von koppelbaren Energiespeichern verfügbar, kann die Energieerzeugungseinrichtung hinsichtlich der Erzeugung von Energie entsprechend hochgefahren werden. Darüber hinaus kann die Zuverlässigkeit des Inselnetzes bewertet und eine entsprechende Bewertung an die Verbrauchsstellen beziehungsweise Verbraucher übermittelt werden. Dies erlaubt es, vor Ort bei den Verbrauchern die Zuverlässigkeit der Energieversorgung beim Betrieb der Verbraucher zu berücksichtigen. Eine entsprechend hohe Zuverlässigkeit wird bei einer hohen Anzahl von koppelbaren Energiespeichern übermittelt, wohingegen eine niedrige Zuverlässigkeit bei einer niedrigen Anzahl von koppelbaren Energiespeichern übermittelt wird. Dies erlaubt es, die Verbraucher ebenfalls vorausschauend zu betreiben.

Mit der Erfindung wird ferner in Entsprechung der Ansprüche 10 bis 12 ein System zum Betrieb eines elektrischen Energieversorgungssystems im Inselbetrieb vorgeschlagen.

Durch die fernsteuerbare Kopplungseinheit, die beispielsweise einen Umrichter aufweisen kann, kann der Energiespeicher bedarfsgerecht mit dem Inselnetz elektrisch gekoppelt werden. Mit der Kopplungseinheit kann der Energiefluss vom Inselnetz zum Energiespeicher und umgekehrt gesteuert, insbesondere auch hinsichtlich der Energiemenge gesteuert werden. Dadurch wird dem Inselnetz eine Energiespeichermöglichkeit gegeben, die es erlaubt, einen Über- und/oder einen Unterschuss an elektrischer Energie im Energieversorgungssystem, insbesondere Unterschiede zwischen Energieerzeugung und Energieverbrauch beziehungsweise Unterschiede zwischen Leistungserzeugung und Leistungsverbrauch wenigstens teilweise auszugleichen. Die Erfindung eignet sich insbesondere für lokale Inselnetze, bei denen Verbraucher mit elektrischen Energiespeichern zum Einsatz kommen. Dies kann beispielsweise bei einem Lagerhaltungssystem gegeben sein, welches mit elektrisch betriebenen Gabelstaplern beschickt wird.

Vorzugsweise ist eine Steuerung zum Steuern der Kopplungseinheit vorgesehen. Dies ermöglicht es die Kopplungseinheit bedarfsgerecht anzusteuern, so dass eine Energieabgabe beziehungsweise -aufnahme durch die Energiespeicher in bedarfsgerechter Weise erreicht werden kann. Die Steuerung kann lokal vor Ort beim Verbraucher und/oder auch bei einer Zentrale angeordnet sein. Vorzugsweise steht die Steuerung mit der Zentrale in Kommunikationsverbindung, die den Betrieb des Energieversorgungssystems steuert. Natürlich kann auch vorgesehene sein, dass die Steuerung dezentral vor Ort bedient wird, beispielsweise durch entsprechend autorisiertes Personal oder dergleichen.

Der elektrische Verbraucher kann durch ein Traktionsfahrzeug und/oder eine unterbrechungsfreie Energieversorgung gebildet sein. Vorzugsweise ist auch das Traktionsfahrzeug elektrisch betrieben. Sowohl das Traktionsfahrzeug als auch die unterbrechungsfreie Energieversorgung weisen Energiespeicher auf, die mittels der Kopplungseinheit mit dem Inselnetz elektrisch koppelbar sind. Auf diese Weise können bereits ohnehin für den bestimmungsgemäßen Gebrauch erforderliche Energiespeicher in erfindungsgemäßer Weise zur Stabilität des Inselnetzes eingesetzt werden.

Vorzugsweise weist das Traktionsfahrzeug eine Schnellkupplung auf. Die Schnellkupplung kann beispielsweise durch eine kontaktbehaftete Kupplung gebildet sein, wobei das Traktionsfahrzeug an einer vorgebbaren Stelle abgestellt wird und eine automatische Kontaktierung erfolgen kann.

Darüber hinaus kann vorgesehen sein, dass die Kopplungseinheit für eine kontaktlose Kopplung ausgebildet ist. Dies kann beispielsweise durch eine magnetische Kopplung erreicht werden, bei der die Kopplungseinheit zum Beispiel zweiteilig ausgebildet ist, wobei ein Teil stationär an einer Stelle, an der das Traktionsfahrzeug abgestellt wird, angeordnet ist, und ein zweiter Teil am Traktionsfahrzeug selbst angeordnet ist. In der vorgegebenen, abgestellten Stellung sind die beiden Teile derart gegeneinander angeordnet, dass eine Kopplung beispielsweise mittels magnetischer Felder oder dergleichen zwecks Energieübertragung erfolgen kann.

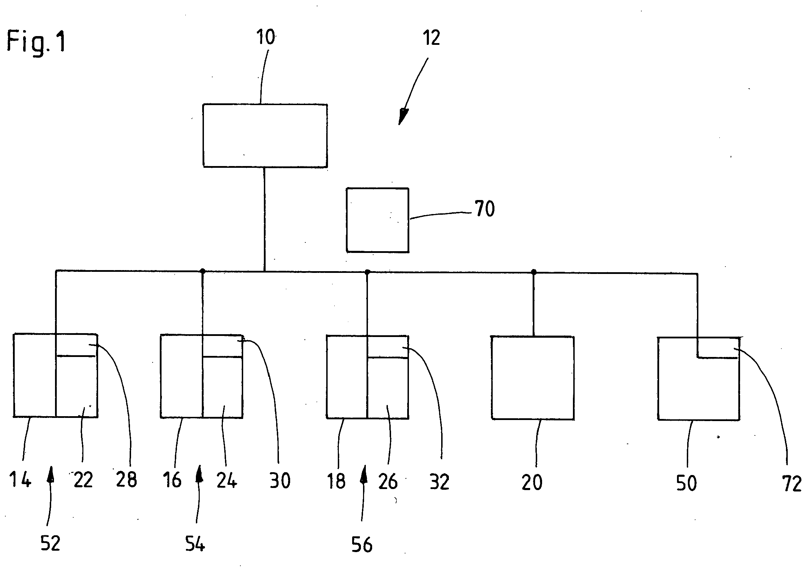

Weitere Vorteile und Merkmale sind der folgenden Beschreibung eines Ausführungsbeispiels zu entnehmen. Im Wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel gemäß Fig. 1 verwiesen. Die Zeichnungen sind Schemazeichnungen und dienen lediglich der Erläuterung des folgenden Ausführungsbeispiels.

Es zeigen:
- Fig. 1: schematisch eine Übersicht in Blockdarstellung eines Inselnetzes, wie es der Erfindung zugrundeliegt,
- Fig. 2: eine Verbrauchsstelle des Inselnetzes gemäß Fig. 1,
- Fig. 3: schematisch ein Leistungs-Zeit-Diagramm mit Kurvenverläufen für die erzeugte und verbrauchte Leistung und
- Fig. 4: ein weiteres schematisches Leistungs-Zeit-Diagramm mit Kurvenverläufen für die erzeugte und verbrauchte Leistung.

Fig. 1 zeigt in schematischer Blockschaltbilddarstellung ein Inselnetz 12, an welchem ein Windgenerator 10 als Energieversorgungseinrichtung angeschlossen ist. Das Inselnetz 12 dient zur elektrischen Energieversorgung eines abgelegenen Sägewerks, welches in einem Bereich positioniert ist, in welchem Holz geerntet wird. An das Inselnetz 12 angeschlossen sind als Verbrauchsstellen Verbraucher 52, 54 und 56 sowie eine Fertigungsmaschine, mit der aus Rohholz Plattenmaterial der gewünschten Stärke hergestellt wird, sowie eine Station für Akkumulatorsätze, die in dieser Station austauschbar gelagert werden und in einen geladenen Zustand gebracht werden.

Jeder der Verbraucher 52, 54, 56 umfasst jeweils einen Gabelstapler 14, 16, 18, eine Kopplungseinheit 28, 30, 32 sowie einen Akkumulatorsatz 22, 24, 26. Der Akkumulatorsatz 22, 24, 26 ist jeweils austauschbar mit dem Gabelstapler 14, 16, 18 verbunden. Wird während des bestimmungsgemäßen Betriebs des Gabelstaplers 14, 16, 18 sein Akkumulatorsatz 22, 24, 26 unter einen vorgebbaren Minimalladungszustand entladen, wird der entsprechende Akkumulatorsatz des Gabelstaplers 14, 16, 18 an der Station 50 für Akkumulatorsätze gegen einen dort vorhandenen, aufgeladenen Akkumulatorsatz getauscht.

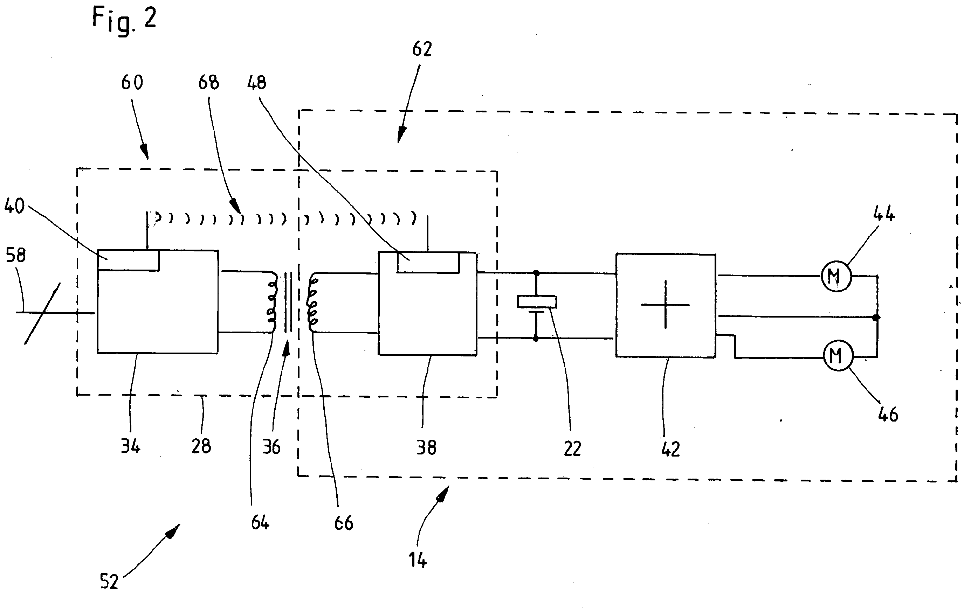

Fig. 2 zeigt den Aufbau der Verbraucher 52, 54, 56 anhand des Verbrauchers 52, wobei die Verbraucher 52, 54, 56 im Wesentlichen identisch ausgebildet sind. Aus Fig. 2 ist ersichtlich, dass die Kopplungseinheit 28 über eine Leitung 58 elektrisch mit dem Inselnetz 12 verbunden ist. Die Kopplungseinheit 28 ist zweiteilig aufgebaut, und zwar aus einem ersten, stationären Teil 60 sowie einem zweiten, mobilen Teil 62. Der stationäre Teil 60 ist im Bereich eines Abstellplatzes für den Gabelstapler 14 ortsfest positioniert angeordnet. Der mobile Teil 62 ist dagegen am Gabelstapler 14 angeordnet. Die Kopplungseinheit 28 stellt eine energietechnische, elektrische Kopplung zwischen dem Inselnetz 12 und dem Gabelstapler 14 her, sobald dieser auf seinem bestimmungsgemäßen Abstellplatz abgestellt ist, weil er beispielsweise nicht benötigt wird. Hierzu sind jeweils im stationären Teil 60 und im mobilen Teil 62 Spulen 64, 66 angeordnet, die im bestimmungsgemäß abgestellten Zustand des Gabelstaplers 14 magnetisch miteinander gekoppelt sind. Dies wird dadurch erreicht, dass die Spulen 64, 66 räumlich einander gegenüberliegend angeordnet sind. Die Spulen 64, 66 bilden auf diese Weise eine Kopplungsstation 36. Ein nicht bezeichnetes Blechpaket erhöht den Kopplungsgrad und den Kopplungswirkungsgrad. Die gekoppelten Spulen 64, 66 bilden somit einen Transformator, mittels dem elektrische Energie zwischen dem stationären Teil 60 und dem mobilen Teil 62 ausgetauscht werden kann, und zwar in bidirektionaler Richtung.

Der ortsfeste Teil 60 der Kopplungseinheit 28 weist einen Umrichter 34 auf, der mittels einer Steuerung 40 steuerbar ist. Über die Leitung 58 ist der Umrichter 34 mit dem Inselnetz 12 elektrisch verbunden. Weiterhin ist an dem Umrichter 34 die Spule 64 angeschlossen. Der Umrichter 34 ist ein Umrichter für einen bidirektionalen Energiefluss, so dass elektrische Energie sowohl vom Inselnetz 12 zum Gabelstapler 14 als auch in umgekehrter Richtung gefördert werden kann. Die Steuerung 40 steuert den Umrichter 34 entsprechend an.

Der mobile Teil 62 der Kopplungseinheit 28, der auf dem Gabelstapler 14 angeordnet ist, weist ebenfalls einen Umrichter 38 auf, der mittels einer Steuerung 48 steuerbar ist. An den Umrichter 38 ist die Spule 66 angeschlossen. Ferner ist an dem Umrichter 38 ein Akkumulatorsatz 22 des Gabelstaplers 14 elektrisch angeschlossen. Der Umrichter 38 ermöglicht ebenso wie der Umrichter 34 einen Energiefluss in bidirektionaler Richtung, das heißt einen Energiefluss von der Spule 66 zum Akkumulatorsatz 22 und in umgekehrter Richtung, und zwar in Abhängigkeit durch die Steuerung 48.

Vorliegend ist die Kopplungseinheit 28 derart ausgebildet, dass ein gekoppelter Zustand der Kopplungsstation 38 automatisch erkannt wird und ein Energiefluss je nach Bedarf freigegeben werden kann. Es ist somit nicht notwendig, manuelle Tätigkeiten zur Kopplung des Gabelstaplers 14 mit der Kopplungseinheit 28 vorzunehmen. Dies ist vorteilhaft für den praktischen Betrieb, da der Gabelstapler 14, ohne Leitungen abklemmen zu müssen, unverzüglich in Betrieb genommen werden kann. Dies erhöht die Benutzerfreundlichkeit deutlich.

Gabelstaplerseitig ist an dem Akkumulatorsatz 22 ferner ein Motorsteuergerät 42 angeschlossen, welches geeignet ist, einen Antriebsmotor 44 sowie einen Gabelmotor 46 anzusteuern. Das Motorsteuergerät 42 ist für einen Vierquadrantenbetrieb ausgelegt, so dass die Motoren 44, 46 nicht nur in beide Richtungen motorisch, sondern auch generatorisch betrieben werden können. Auf diese Weise kann Bewegungsenergie wieder in elektrische Energie zurückerhalten und im Akkumulatorsatz 22 gespeichert werden. Der Antriebsmotor 44 dient zum Vortrieb des Gabelstaplers 14. Dagegen dient der Gabelmotor 46 zum Antrieb einer nicht dargestellten Hubgabel des Gabelstaplers 14.

Wie aus Fig. 2 ferner ersichtlich ist, stehen die Steuerungen 40, 48 über eine Nahfunkverbindung 68 miteinander in Kommunikationsverbindung. Vorliegend ist vorgesehen, dass die Steuerung 48 Steuerbefehle von der Steuerung 40 erhält und im Gegenzug Zustandswerte an die Steuerung 40 zurückübermittelt. Eine Zentrale 70 (Fig. 1) überwacht den Betrieb des Inselnetzes 12. Die Zentrale 70 steht über nicht näher bezeichnete Kommunikationsverbindungen mit den jeweiligen Steuerungen 40 sowie auch mit dem Windgenerator 10 in kommunikationstechnischer Verbindung. Darüber hinaus werden mittels nicht näher dargestellter Sensoren die Betriebszustände der Fertigungsmaschine 20 sowie der Station für Akkumulatorsätze 50 überwacht.

Die Kopplungseinheit 28 ist als Schnellkupplung ausgebildet, die eine kontaktlose Kopplung erlaubt. Hierdurch wird vorteilhaft eine galvanische Trennung zwischen dem Anschluss 58 sowie dem Gabelstapler 14 erreicht.

Die Zentrale 70 sammelt sämtliche Daten bezüglich des Inselnetzes 12, insbesondere Betriebs- und Zustandsdaten der Verbraucher 52, 54, 56, 20, 50 sowie bezüglich des Windgenerators 10. Unter weiterer Berücksichtigung der aktuellen Winddaten beziehungsweise Windprognosen wird durch die Zentrale 70 eine Steuerung des Windgenerators 10 hinsichtlich seiner Leistung vorgenommen.

So wird die erzeugte und die verbrauchte Leistung saldiert. In Abhängigkeit des Saldos erfolgt ein Koppeln der Energiespeicher 22, 24, 26 sowie auch der Akkumulatorsätze der Station 50 nach Bedarf, um ermittelte Differenzen zwischen Energieerzeugung und Energieverbrauch hinreichend abfangen zu können. Vorliegend sind die Kopplungseinheiten 28, 30, 32, 72 durch die Zentrale 70 ferngesteuert.

Die Zentrale 70 steuert sämtliche Einrichtungen und Einheiten des Inselnetzes 12 derart, dass vorausschauend auf ein sich wiederholendes, zeitraumbezogenes Leistungsextrem vorausschauend ferngesteuert wird. Hierdurch kann eine zuverlässige Energieversorgung erreicht werden, weil Lastspitzen sowohl im Verbrauch als auch in der Erzeugung elektrischer Energie wirkungsvoll abgefangen werden können, so dass hierdurch verursachte Ausfälle weitgehend vermieden werden können.

Lokal sind die Kopplungseinheiten 28, 30, 32 mit einem fest vorgegebenen Kopplungszeitraum versehen. Dieser ist vorliegend derart festgelegt, dass Produktionsanläufe der Fertigungsmaschine 20 und ein dadurch verursachter kurzzeitiger Energieverbrauchsimpuls abgefangen werden können. Die Kopplungseinheiten 28, 30, 32 sind jeweils mit individuell versehenen Werten für einen Ladezustand am Ende des Kopplungszeitraums versehen, so dass die entsprechenden Gabelstapler 14, 16, 18 den für sie vorgesehenen Betrieb sicher wahrnehmen können. Weiterhin ist eine Regelung für die Energieerzeugung durch den Windgenerator 10 vorgesehen, wobei dessen Energieerzeugung in Abhängigkeit der koppelbaren Akkumulatorsätze 22, 24, 26 geregelt wird. Die Regelung berücksichtigt natürlich auch weitere Parameter wie Windstärke, Wettervorhersagen und dergleichen.

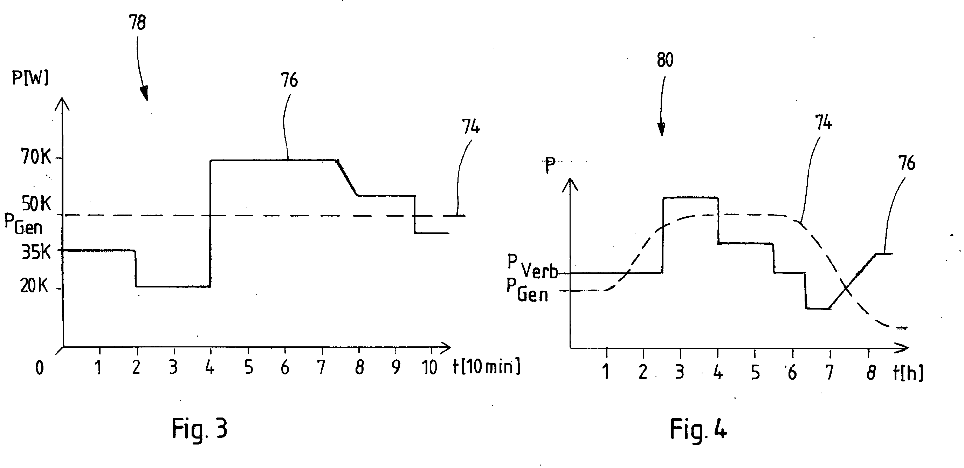

In Fig. 3 ist schematisch ein Leistungs-Zeit-Diagramm 78 dargestellt. In dem Diagramm 78 ist auf der Ordinate die elektrische Leistung P in Watt aufgetragen, wohingegen auf der Abszisse die Zeit t in 10-Minuten-Intervallen aufgetragen ist. Ein gestrichelter Kurvenverlauf 74 im Leistungs-Zeit-Diagramm 78 repräsentiert eine erzeugte Leistung PGen. Ein durchgezogener Kurvenverlauf 76 repräsentiert die im Inselnetz 12 verbrauchte Leistung PVerb. In dieser Ausgestaltung ist im im Leistungs-Zeit-Diagramm 78 dargestellten Bereich die erzeugte Leistung konstant bei etwa 50 kW. Die Energieerzeugungseinrichtung kann in dem dargestellten Zeitintervall seine Energieerzeugung aufgrund entsprechender Reaktionszeitkonstanten nicht wesentlich ändern. Wie aus dem Diagramm 78 ersichtlich ist, ändert sich der Energieverbrauch über der Zeit t. Erkennbar ist ferner aus dem Diagramm 78, dass es eine permanente Abweichung zwischen erzeugter und verbrauchter Energie gibt. Im Zeitbereich bis zur vierten Minute ist die Menge der erzeugten elektrischen Energie größer als die der verbrauchten Energie. Danach springt der Energieverbrauch auf einen Wert von etwa 70 kW, das heißt, es wird mehr Energie verbraucht als erzeugt wird. Nach der neunten Minute ist die Menge der erzeugten Energie wieder höher als die der verbrauchten Energie.

Mittels der Steuerung 48 werden die verfügbaren Akkumulatorsätze 22, 24, 26 derart gesteuert, dass die Abweichung zwischen erzeugter und verbrauchter Energie nahezu ausgeglichen werden kann. Bis zur vierzigsten Minute wird dazu die überschüssige Energie in den angeschlossenen Akkumulatorsätzen 22, 24, 26 gespeichert. Danach wird den Akkumulatorsätzen mittels der Steuerung 48 ab der vierzigsten Minute bis etwas nach der neunzigsten Minute Energie entnommen, um den Fehlbetrag zwischen erzeugter und verbrauchter Energie ausgleichen zu können. Hierdurch wird eine zuverlässige, stabile Energieversorgung im Inselnetz 12 erreicht.

Eine weitere Ausgestaltung zeigt Fig. 4. Das Diagramm 80 der Fig. 4 ist grundsätzlich wie das der Fig. 3 aufgebaut. Auf der Ordinate ist wieder die Leistung und auf der Abszisse ist wieder die Zeit aufgetragen. Die Abszisse weist hier jedoch eine Stundeneinteilung auf. In dem Diagramm 80 sind die Kurvenverläufe 74, 76 der erzeugten und der verbrauchten elektrischen Leistung aufgetragen. Im Unterschied zur Fig. 3 ist nunmehr die erzeugte elektrische Leistung PGen nicht konstant, sondern sie ändert sich über der Zeit t. Vorliegend ist dies durch den Windgenerator 10 verursacht, der aufgrund eines erhöhten Windaufkommens eine entsprechend erhöhte elektrische Leistung erzeugt. Zusätzlich kommt eine sich ebenfalls ändernde Verbrauchsleistung (Kurve 76) hinzu. Auch hier weichen die Leistungen PGen, PVerb voneinander ab. Die Abweichung wird mittels der verfügbaren Akkumulatorsätze 22, 24, 26 unter Zuhilfenahme der Steuerung 48 ausgeglichen, wie bereits zuvor beschrieben.

Die vorliegende Erfindung erlaubt es somit, abseits von einem öffentlichen elektrischen Energieversorgungsnetz eine Produktionsanlage, hier ein Sägewerk, zu betreiben, wobei eine hohe Zuverlässigkeit der Energieversorgung erreicht werden kann. Darüber hinaus erlaubt die Ausgestaltung in Form eines Inselnetzes eine hohe Mobilität, so dass das Sägewerk mit geringem Aufwand bedarfsweise abgebaut und an einer anderen, besser geeigneten Stelle wieder aufgebaut werden kann, um beispielsweise Anfahrtswege für geerntetes Holz zu reduzieren. Auf diese Weise kann ein geringer Energieverbrauch erreicht werden.

Das in den Figuren dargestellte Ausführungsbeispiel dient lediglich der Erläuterung der Erfindung und ist für diese nicht beschränkend. Selbstverständlich lässt sich die Erfindung auch für andere Inselnetze einsetzen, beispielsweise für den Betrieb von mobilen Unterkünften oder dergleichen.

**Bezugszeichenliste**

| | | | |
|---|---|---|---|
| 10 | Windgenerator | 42 | Motorsteuergerät |
| 12 | Inselnetz | 44 | Antriebsmotor |
| 14 | Gabelstapler | 46 | Gabelmotor |
| 16 | Gabelstapler | 48 | Steuerung |
| 18 | Gabelstapler | 50 | Station für Akkumulatorsätze |
| 20 | Fertigungsmaschine | 52 | Verbraucher |
| 22 | Akkumulatorsatz | 54 | Verbraucher |
| 24 | Akkumulatorsatz | 56 | Verbraucher |
| 26 | Akkumulatorsatz | 58 | Anschlussleitung |
| 28 | Kopplungseinheit | 60 | Stationärer Teil |
| 30 | Kopplungseinheit | 62 | Mobiler Teil |
| 32 | Kopplungseinheit | 64 | Spule |
| 34 | Umrichter | 66 | Spule |
| 36 | Kopplungsstation | 68 | Funkverbindung |
| 38 | Umrichter | 70 | Zentrale |
| 40 | Steuerung | 72 | Kopplungseinheit |
| 74 | Kurvenverlauf erzeugte Energie | 76 | Kurvenverlauf verbrauchte Energie |
| 80 | Leistungs-Zeit-Diagramm | 78 | Leistungs-Zeit-Diagramm |

## Patentansprüche

1. Verfahren zum Betrieb eines elektrischen Energieversorgungssystems im Inselbetrieb, wobei das Energieversorgungssystem eine elektrische Energieerzeugungseinrichtung (10), eine Mehrzahl von elektrischen Verbrauchern (14, 16, 18, 20) sowie ein elektrisches Inselnetz (12) zur elektrischen Kopplung der Energieerzeugungseinrichtung (10) mit den Verbrauchern (14, 16, 18, 20) aufweist, wobei wenigstens ein elektrischer Verbraucher (14, 16, 18) einen Energiespeicher (22, 24, 26) aufweist, welcher Energiespeicher (22, 24, 26) beim bestimmungsgemäßen Gebrauch des Verbrauchers (14, 16, 18) entladen und bei Kopplung des Verbrauchers (14, 16, 18) mit dem Inselnetz (12) geladen wird, wobei zum Ausgleich von Energieschwankungen im Energieversorgungssystem ein Überschuss an elektrischer Energie im Energieversorgungssystem im Energiespeicher (22, 24, 26) eines mit dem Inselnetz (12) gekoppelten Verbrauchers (14, 16, 18) gespeichert wird und ein Unterschluss an elektrischer Energie im Energieversorgungssystem aus dem Energiespeicher (22, 24, 26) eines mit dem Inselnetz (12) gekoppelten Verbrauchers (14, 16, 18) entnommen und in das damit gekoppelte Inselnetz (12) gespeist wird, wobei die Energieerzeugungseinrichtung ein elektrischer Generator ist, der mittels Windkraft oder Wasserkraft angetrieben wird, wobei als Verbraucher wenigstens teilweise Traktionsfahrzeuge mit einem Elektroantrieb und einem Akkumulator als Energiespeicher eingesetzt werden, wobei der Energiespeicher (22, 24, 26) gesteuert mit dem Inselnetz (12) gekoppelt wird, **dadurch gekennzeichnet, dass** die Energieerzeugung der elektrischen Energieerzeugungseinrichtung (10) in Abhängigkeit der koppelbaren Energiespeicher (22, 24, 26) geregelt wird.

2. Verfahren nach Anspruch 1, **dadurch gekennzeichnet, dass** die erzeugte und verbrauchte Energie saldiert wird.

3. Verfahren nach einem der Ansprüche 1 bis 2, **dadurch gekennzeichnet, dass** das Koppeln in Abhängigkeit des Saldos erfolgt.

4. Verfahren nach einem der Ansprüche 1 bis 3, **dadurch gekennzeichnet, dass** das Koppeln der Energiespeicher (22, 24, 26) ferngesteuert erfolgt.

5. Verfahren nach einem der Ansprüche 1 bis 4, **dadurch gekennzeichnet, dass** ein sich wiederholendes, zeitbezogenes Leistungsextrem ermittelt wird.

6. Verfahren nach Anspruch 5, **dadurch gekennzeichnet, dass** vorausschauend auf das Leistungsextrem gesteuert wird.

7. Verfahren nach einem der Ansprüche 1 bis 6, **dadurch gekennzeichnet, dass** ein Ladezustand des elektrischen Energiespeichers (22, 24, 26) geregelt wird.

8. Verfahren nach einem der Ansprüche 1 bis 7, **dadurch gekennzeichnet, dass** ein Kopplungszeitraum vorgegeben wird.

9. Verfahren nach einem der Ansprüche 1 bis 8, **dadurch gekennzeichnet, dass** der Ladezustand am Ende des Kopplungszeitraums vorgegeben wird.

10. System zum Betrieb eines elektrischen Energieversorgungssystems im Inselbetrieb, wobei das Energieversorgungssystem eine elektrische Energieerzeugungseinrichtung (10), eine Mehrzahl von elektrischen Verbrauchern (14, 16, 18, 20) sowie ein elektrisches Inselnetz (12) zur elektrischen Kopplung der Energieerzeugungseinrichtung (10) mit den Verbrauchern (14, 16, 18, 20) aufweist, wobei wenigstens ein elektrischer Verbraucher (14, 16, 18) einen Energiespeicher (22, 24, 26) aufweist, welcher Energiespeicher (22, 24, 26) beim bestimmungsgemäßen Gebrauch des Verbrauchers (14, 16, 18) entladen und bei Kopplung des Verbrauchers (14, 16, 18) mit dem Inselnetz (12) geladen wird, wobei das Energieversorgungssystem eine fernsteuerbare Kopplungseinheit (28, 30, 32) umfasst, mittels der der Energiespeicher (22, 24, 26) mit dem Inselnetz (12) bidirektional gekoppelt ist, wobei das Energieversorgungssystem angepasst ist, dass zum Ausgleich von Energieschwankungen im Energieversorgungssystem ein Überschuss an elektrischer Energie im Energieversorgungssystem im Energiespeicher (22, 24, 26) eines mit dem Inselnetz (12) gekoppelten Verbrauchers (14, 16, 18) gespeichert wird und ein Unterschluss an elektrischer Energie im Energieversorgungssystem aus dem Energiespeicher (22, 24, 26) eines mit dem Inselnetz (12) gekoppelten Verbrauchers (14, 16, 18) entnommen und in das damit gekoppelte Inselnetz (12) gespeist wird, wobei die Energieerzeugungseinrichtung ein mittels Windkraft oder Wasserkraft angetriebener elektronischer Generator ist, wobei die Verbraucher wenigstens teilweise durch Traktionsfahrzeuge mit einem Elektroantrieb und einem Akkumulator als Energiespeicher gebildet sind, wobei das System eine Steuerung zum Steuern der Kopplungseinheit (28, 30, 32) aufweist, wobei die Steuerung bei einer Zentrale (70) angeordnet ist, wobei die Verbraucher (14, 16, 18) über Sende- und Empfangseinrichtungen verfügen, wobei die Zentrale (70) über eine Steuerungs- und Überwachungseinrichtung sowie über eine Sende- und Empfangseinrichtung verfügt, **dadurch gekennzeichnet, dass** die Energieerzeugung der elektrischen Energieerzeugungseinrichtung (10) in Abhängigkeit der koppelbaren Energiespeicher (22, 24, 26) mittels der Zentrale (70) steuerbar ist..

11. System nach Anspruch 10, **dadurch gekennzeichnet, dass** das Traktionsfahrzeug (14, 16, 18) eine Schnellkupplung aufweist.

12. System nach einem der Ansprüche 10 bis 11, **dadurch gekennzeichnet, dass** die Kopplungseinheit (28, 30, 32) für eine kontaktlose Kopplung ausgebildet ist.

## Claims

1. A method for operating an electric energy supply system in isolated operation, wherein the energy supply system comprises an electric energy generation device (10), a plurality of electric consumers (14, 16, 18, 20) as well as an electric stand-alone network (12) for electrically coupling the energy generation device (10) to the consumers (14, 16, 18, 20), wherein at least one electric consumer (14, 16, 18) comprises an energy storage (22, 24, 26), which energy storage (22, 24, 26) will be discharged in case of an appropriate use by the consumer (14, 16, 18) and will be charged in case of a coupling of the consumer (14, 16, 18) with the stand-alone network (12), wherein for compensating energy fluctuations in the energy supply system a surplus of electric energy in the energy supply system is stored in the energy storage (22, 24, 26) of a consumer (14, 16, 18) coupled to the stand-alone network (12) and a shortage of electric energy in the energy supply system is compensated by taking energy from the energy storage (22, 24, 26) of a consumer (14, 16, 18) coupled to the stand-alone network (12) and feeding it into the stand-alone network (12) coupled thereto, wherein the energy generation device is an electric generator which is driven by wind power or water power, wherein at least partially traction vehicles having an electric drive and an accumulator as energy storage will be used as consumers, wherein the energy storage (22, 24, 26) is coupled to the stand-alone network (12) in a controlled manner, **characterized in that** the energy generation of the electric energy generation device (10) is regulated in dependence on the energy storages (22, 24, 26) that can be coupled.

2. A method according to claim 1, **characterized in that** the generated and consumed energy will be balanced.

3. A method according to one of the claims 1 through 2, **characterized in that** the coupling takes place in dependence on the balance.

4. A method according to one of the claims 1 through 3, **characterized in that** the coupling of the energy storages (22, 24, 26) will be realized in a remote-controlled manner.

5. A method according to one of the claims 1 through 4, **characterized in that** a repetitive, time-related performance extreme will be determined.

6. A method according to claim 5, **characterized in that** the control will be realized in a proactive manner with respect to the performance extreme.

7. A method according to one of the claims 1 through 6, **characterized in that** a state of charge of the electric energy storage (22, 24, 26) will be controlled.

8. A method according to one of the claims 1 through 7, **characterized in that** a coupling period will be predefined.

9. A method according to one of the claims 1 through 8, **characterized in that** the state of charge at the end of the coupling period will be predefined.

10. A system for operating an electric energy supply system in isolated operation, wherein the energy supply system comprises an electric energy generation device (10), a plurality of electric consumers (14, 16, 18, 20) as well as an electric stand-alone network (12) for electrically coupling the energy generation device (10) to the consumers (14, 16, 18, 20), wherein at least one electric consumer (14, 16, 18) comprises an energy storage (22, 24, 26), which energy storage (22, 24, 26) will be discharged in case of an appropriate use by the consumer (14, 16, 18) and will be charged in case of a coupling of the consumer (14, 16, 18) with the stand-alone network (12), wherein the energy supply system includes a remote-controllable coupling unit (28, 30, 32), by means of which the energy storage is bidirectionally coupled to the stand-alone network (12), wherein the energy supply system is adapted such that for compensating energy fluctuations in the energy supply system a surplus of electric energy in the energy supply system is stored in the energy storage (22, 24, 26) of a consumer (14, 16, 18) coupled to the stand-alone network (12) and a shortage of electric energy in the energy supply system is compensated by taking energy from the energy storage (22, 24, 26) of a consumer (14, 16, 18) coupled to the stand-alone network (12) and feeding it into the stand-alone network (12) coupled thereto, wherein the energy generation device is an electric generator which is driven by wind power or water power, wherein the consumers are at least partially formed by traction vehicles having an electric drive and an accumulator as energy storage, wherein the system comprises a control for controlling the coupling unit (28, 30, 32), wherein the control is arranged in a centre (70), wherein the consumers (14, 16, 18) have transmitter and receiver devices, wherein the centre (70) comprises a control and monitoring device as well as a transmitter and receiver device, **characterized in that** the energy generation of the electric energy generation device (10) can be controlled by means of the centre (70) in dependence on the energy storages (22, 24, 26) that can be coupled.

11. A system according to claim 10, **characterized in that** the traction vehicle (14, 16, 18) comprises a quick coupling.

12. A system according to one of the claims 10 through 11, **characterized in that** the coupling unit (28, 30, 32) is configured for a contactless coupling.

## Revendications

1. Procédé de fonctionnement d'un système d'alimentation en énergie électrique dans l'exploitation insulaire, dans lequel le système d'alimentation en énergie comprend un dispositif de génération d'énergie électrique (10), une pluralité de consommateurs d'énergie électrique (14, 16, 18, 20) ainsi qu'un réseau électrique autonome (12) pour le couplage électrique du dispositif de génération d'énergie (10) aux consommateurs (14, 16, 18, 20), dans lequel au moins un consommateur électrique (14, 16, 18) comprend un réservoir d'énergie (22, 24, 26), lequel réservoir d'énergie (22, 24, 26) est déchargé dans le cas d'une utilisation appropriée par le consommateur (14, 16, 18) et est chargé, si le consommateur (14, 16, 18) est couplé au réseau autonome (12), dans lequel pour compenser des variations d'énergie dans le système d'alimentation en énergie un surplus d'énergie électrique dans le système d'alimentation en énergie est stocké dans le réservoir d'énergie (22, 24, 26) d'un consommateur (14, 16, 18) couplé au réseau autonome (12) et une insuffisance d'énergie électrique dans le système d'alimentation en énergie est compensée en retirant de l'énergie dans le réservoir d'énergie (22, 24, 26) d'un consommateur (14, 16, 18) couplé au réseau autonome (12) et en l'injectant dans le réseau autonome (12) couplé à celui-ci, dans lequel le dispositif de génération d'énergie est un générateur électrique, qui est entraîné par moyen d'énergie éolienne ou d'énergie hydraulique, dans lequel au moins partiellement des véhicules de traction ayant une propulsion électrique et un accumulateur comme réservoir d'énergie sont utilisés comme consommateurs, le réservoir d'énergie (22, 24, 26) étant couplé de manière commandée au réseau autonome (12), **caractérisé en ce que** la génération d'énergie du dispositif de génération d'énergie électrique (10) est réglée en fonction des réservoirs d'énergie (22, 24, 26) pouvant être couplés.

2. Procédé selon la revendication 1, **caractérisé en ce que** l'énergie générée et consommée est soldée.

3. Procédé selon l'une des revendications 1 à 2, **caractérisé en ce que** le couplage se fait en fonction du solde.

4. Procédé selon l'une des revendications 1 à 3, **caractérisé en ce que** le couplage des réservoirs d'énergie (22, 24, 26) se fait de manière télécommandée.

5. Procédé selon l'une des revendications 1 à 4, **caractérisé en ce qu'**un extrême de puissance répétitif et par rapport au temps est déterminé.

6. Procédé selon la revendication 5, **caractérisé en ce que** la commande se fait de manière prévoyante par rapport à l'extrême de puissance.

7. Procédé selon l'une des revendications 1 à 6, **caractérisé en ce qu'**un état de charge du réservoir d'énergie électrique (22, 24, 26) est réglé.

8. Procédé selon l'une des revendications 1 à 7, **caractérisé en ce qu'**une période de couplage est prédéfinie.

9. Procédé selon l'une des revendications 1 à 8, **caractérisé en ce que** l'état de charge est prédéfini à la fin de la période de couplage.

10. Système de fonctionnement d'un système d'alimentation en énergie électrique dans l'exploitation insulaire, dans lequel le système d'alimentation en énergie comprend un dispositif de génération d'énergie électrique (10), une pluralité de consommateurs d'énergie électrique (14, 16, 18, 20) ainsi qu'un réseau électrique autonome (12) pour le couplage électrique du dispositif de génération d'énergie (10) aux consommateurs (14, 16, 18, 20), dans lequel au moins un consommateur électrique (14, 16, 18) comprend un réservoir d'énergie (22, 24, 26), lequel réservoir d'énergie (22, 24, 26) est déchargé dans le cas d'une utilisation appropriée par le consommateur (14, 16, 18) et est chargé, si le consommateur (14, 16, 18) est couplé au réseau autonome (12), le système d'alimentation en énergie comprend une unité de couplage (28, 30, 32) pouvant être télécommandée, par moyen de laquelle le réservoir d'énergie (22, 24, 26) est couplé de manière bidirectionnelle au réseau autonome (12), dans lequel le système d'alimentation en énergie est adapté à compenser des variations d'énergie dans le système d'alimentation en énergie en stockant un surplus d'énergie électrique dans le système d'alimentation en énergie dans le réservoir d'énergie (22, 24, 26) d'un consommateur (14, 16, 18) couplé au réseau autonome (12) et en compensant une insuffisance d'énergie électrique dans le système d'alimentation en énergie en retirant de l'énergie dans le réservoir d'énergie (22, 24, 26) d'un consommateur (14, 16, 18) couplé au réseau autonome (12) et en l'injectant dans le réseau autonome (12) couplé à celui-ci, dans lequel le dispositif de génération d'énergie est un générateur électrique entraîné par moyen d'énergie éolienne ou d'énergie hydraulique, dans lequel les consommateurs sont formés au moins partiellement par des véhicules de traction ayant une propulsion électrique et un accumulateur comme réservoir d'énergie, le système comprenant une commande pour commander l'unité de couplage (28, 30, 32), dans lequel la commande est disposée dans un centre (70), les consommateurs (14, 16, 18) comprenant des dispositifs émetteur et récepteur, le centre (70) comprenant un dispositif de commande et de surveillance ainsi qu'un dispositif émetteur et récepteur, **caractérisé en ce que** la génération d'énergie du dispositif de génération d'énergie électrique (10) peut être commandée par le centre (70) en fonction des réservoirs d'énergie (22, 24, 26) pouvant être couplés.

11. Système selon la revendication 10, **caractérisé en ce que** le véhicule de traction (14, 16, 18) comprend un coupleur rapide.

12. Système selon l'une des revendications 10 à 11, **caractérisé en ce que** l'unité de couplage (28, 30, 32) est configurée pour un couplage sans contact.
